**Europäisches Patentamt**

**European Patent Office**

**Office européen des brevets**

(11) Veröffentlichungsnummer: **0 072 395**
**B1**

(12) # EUROPÄISCHE PATENTSCHRIFT

(45) Veröffentlichungstag der Patentschrift:
15.10.86

(51) Int. Cl.⁴: **B 60 K 26/04,** F 02 D 11/10 //
G05D13/00

(21) Anmeldenummer: **82104165.4**

(22) Anmeldetag: **13.05.82**

(54) **Einrichtung zum Steuern der Stellung eines ein Kraftstoff-Luft-Gemisch beeinflussenden Elements.**

(30) Priorität: **13.08.81 DE 3131996**

(43) Veröffentlichungstag der Anmeldung:
**23.02.83 Patentblatt 83/8**

(45) Bekanntmachung des Hinweises auf die Patenterteilung:
**15.10.86 Patentblatt 86/42**

(84) Benannte Vertragsstaaten:
**DE FR GB IT**

(56) Entgegenhaltungen:
**WO-A-80/00277**
**DE-A-2 131 249**
**DE-A-2 654 455**
**DE-A-2 853 995**
**DE-A-3 135 479**
**US-A-3 878 915**
**US-A-4 090 480**

(73) Patentinhaber: **VDO Adolf Schindling AG,
Gräfstrasse 103, D-6000 Frankfurt/Main (DE)**

(72) Erfinder: **Pfalzgraf, Manfred, Steinweg 14, D-6484
Birstein 1 (DE)**
Erfinder: **Probst, Kurt, Altkönigstrasse 19, D-6231
Schwalbach (DE)**

(74) Vertreter: **Könekamp, Herbert, Dipl.- Ing., Sodener
Strasse 9, D-6231 Schwalbach (DE)**

EP 0 072 395 B1

## Beschreibung

Die Erfindung bezieht sich auf eine Einrichtung zum Steuern der Stellung eines ein Kraftstoff-Luft-Gemisch beeinflussenden Elements eines Verbrennungamotore eines Kraftfahrzeuges, mit einem Sollwertgeber zum Erzeugen eines elektrischen Sollwertsignals, des einer Steuerelektronik zuleitbar ist, von der ein Stellglied zum Verstellen des das Kraftstoff-Luft-Gemisch beeinflussenden Elemente in eine der Stellung des Sollwertgebers entsprechende Stellung steuerbar ist.

Bei derartigen bekannten Einrichtungen besteht der Sollwertgeber aus einem über des Gaspedal vom Fahrer verstellbaren Potentiometer. Entsprechend der Stellung des Potentiometers wird ein entsprechendes Signal der Steuerelektronik zugeleitet. Diese steuert ein elektromotorisches Stellglied so an, daß das das Kraftstoff-Luft-Gemisch beeinflussende Element, welches eine Drosselklappe sein kann, in eine Stellung gebracht wird, die der Stellung des Gaspedals entspricht.

Dies kann bei einem Anfahrvorgang dazu führen, daß es zu einem sogenannten Anfahrruck des Fahrzeuges kommt, wenn ein einem zu hohen Sollwert entsprechendes Signal der Steuerelektronik zugeleitet und von dieser das Stellglied entsprechend angesteuert wird.

Die richtige Dosierung des Sollwerts beim Anfahrvorgang ist aber schwierig, da der Fahrer dies nur rein gefühlsmäßig tun kann.

Besonders schwierig ist ein ruckfreies Anfahren bei Nutzfahrzeugen, die bereits ein hohes Eigengewicht besitzen zu dem noch ein stark variierendes Ladegewicht kommt.

Dabei erhöht sich die Schwierigkeit noch, wenn das Anfahren bergauf erfolgen soll.

Ein weitgehend ruckfreies Anfahren ist aber erforderlich, wenn empfindliche Fracht oder Personen befördert werden sollen.

Es ist daher Aufgabe der Erfindung, eine Einrichtung nach dem Oberbegriff zu schaffen, die ein ruckfreies Anfahren ermöglicht.

Diese Aufgabe wird erfindungsgemäß dadurch gelöst, das zwischen Sollwertgeber und Steuerelektronik eine Reglereinheit angeordnet ist, durch die bei Verstellung das Sollwertgabers aus seiner der Fahrgeschwindigkeit 0 entsprechenden Endstellung die Änderung der Größe des Sollwertsignals pro Zeiteinheit unterhalb einer bestimmten Fahrgeschwindigkeit auf einen Maximalwert begrenzbar ist. Durch die erfindungsgemäße Ausbildung erfolgt während des Anfahrvorganges auch bei einem am Gaspedal hoch eingestellten Sollwert ein sanfter Anstieg des der Steuerelektronik zugeleiteten Signals und damit ein sanftes ruckfreies Anfahren bis eine Fahrgeschwindigkeit erreicht ist, ab der auf herkömmliche Weise die Stellgliedansteuerung erfolgen kann, ohne das es noch zu einem Rucken kommt. Auf diese Weise kann der Fahrer beim Anfahrvorgang das Gaspedal in die Vollgasstellung bringen, ohne dass es zu einem Anfahrruck kommt.

Der Maximalwert, auf den die Änderung der Gröse des Sollwertsignals pro Zeiteinheit begrenzbar ist, ist vorzugsweise ein einstellbarer Konstantwert, der fahrzeugspezifisch ermittelt wird.

In einer vorteilhaften Ausgestaltung der Erfindung kann die Änderung der Größe des Sollwertsignals pro Zeiteinheit ab einem Wert begrenzbar sein, der der Maximalstellung des Sollwertgebers entspricht, bei der die Fahrgeschwindigkeit 0 ist. Dies bedeutet, daß bei einer hohen Sollwertvorgabe das Stellglied sofort ohne Begrenzung seiner Veretellgeschwindigkeit in eine Lage fahren kann, in der das Fahrzeug aufgrund verschiedener zu überwindender Widerstände wie Fahrzeuggewicht, Reibungsverluste im Getriebe und Schlupf der Reifen sich noch nicht in Bewegung setzt. Erst von diesem Punkt ab oberhalb dessen es erst zu einer Fahrzeugbewegung kommt, wird die Änderung der Größe des Sollwertsignals pro Zeiteinheit auf den Maximalwert begrenzt, bis die bestimmte Fahrgeschwindigkeit erreicht ist.

Der Wert bis zu dem die Änderung der Größe des Sollwertsignals pro Zeiteinheit ohne Begrenzung erfolgen kann, kann ein einstellbarer Konstantwert sein, der fahrzeugspezifisch festzulagen ist, wobei insbesondere das Fahrzeuggewicht zu berücksichtigen ist.

Dieser Wert kann aber auch ein variabler Wert sein, der in Abhängigkeit des Gesamtfahrzeuggewichts selbsttätig verstellbar ist. Auf diese Weise wird automatisch bei jedem Beladungszustand des Fahrzeuges der optimale Anfahrvorgang erreicht.

Die Reglereinheit kann eine Integrierstufe aufweisen, durch die die Änderung der Größe des Sollwertsignals pro Zeiteinheit begrenzbar ist.

Soll die Änderung der Größe des Sollwertsignals pro Zeiteinheit erst ab einem bestimmten Wert begrenzbar sein, so kann die Reglereinheit weiterhin eine Begrenzungsstufe aufweisen, wobei die Ausgangswerte der Integrierstufe und der Begrenzungsstufe einer Additionsstufe und deren Ausgang der Steuerelektronik zuleitber ist. Diese Ausbildung hat den Vorteil, daß der Anfahrvorgang sofort erfolgen kann und nicht erst abgewartet werden muß, bis das mit begrenztem Anstieg sich vergrößernde Sollwertsignal eine Größe erreicht hat, bei der es zu einer Bewegung des Fahrzeuges kommt.

Die Fahrzeuggeschwindigkeit kann von einem Geschwindigkeitsgeber erfaßbar und in ein elektrisches Geschwindigkeitssignal umsetzbar sein.

Das Geschwindigkeitssignal kann dem einen Eingang und ein der bestimmten Fahrgeschwindigkeit entsprechendes Signal einem zweiten Eingang eines Geschwindigkeitsvergleichers zuleitbar sein, von dem bei größerem Geschwindigkeitssignal als dem bestimmten Fahrgeschwindigkeitssignal, ab dem die Steuerelektronik wieder auf herkömmliche Weise arbeitet, ein Ausgangssignal abgebbar ist. Dabei kann der Geschwindigkeitsvergleicher ein Schwellwertschalter sein. Somit wird bei Erreichen der bestimmten Fahrgeschwindigkeit ein Signal erzeugt, durch das ein Umschalten von der begrenzten zur nichtbegrenzten Steuerung des Stellglieds erfolgt. Das Sollwertsignal kann dem einen Eingang und ein der Maximalstellung des Sollwertgebers, bei der die Fahrgeschwindigkeit 0 ist, entsprechendes elektrisches Konstantsignal einem zweiten Eingang eines Sollwertvergleichers zuleitbar sein, von dem bei größerem Sollwertsignal als Konstantsignal ein Ausgangssignal abgebbar ist. Auch hierbei kann der Sollwertvergleicher ein Schwellwertschalter sein. Der Sollwertvergleicher gibt somit nur ein Signal ab, wenn das bei ihm eingehende Sollwertsignal größer ist, als der an seinem anderen Eingang anliegende Konstantwert.

Der Ausgang des Geschwindigkeitsvergleichers und der Ausgang des Sollwertvergleichers können mit einer Schalteinheit verbunden sein, durch die bei vorhandenem Ausgangssignal des Sollwertvergleichers und nichtvorhandenem Ausgangssignal des Geschwindigkeitsvergleichers ein Sollwertsignal des Sollwertgebers der Reglereinheit zuleitbar ist. Damit legen Geschwindigkeitsvergleicher und Sollwertvergleicher eindeutig die Kriterien fest, unter denen die Reglereinheit in Funktion gesetzt wird.

Der Ausgang des Sollwertvergleichers kann mit einer zweiten Schalteinheit verbunden sein, durch die bei nichtvorhandenem Ausgangssignal des Sollwertvergleichers eine Verbindung des Ausgangs des Sollwertgebers mit der Steuerelektronik herstellbar ist. Damit wird das Sollwertsignal dann direkt der Steuerelektronik zugeleitet, wenn der Sollwert kleiner ist als der am Sollwertvergleicher fest eingestellte maximale Beschleunigungswert. Dies ist auch problemlos möglich, da bei einer solch geringen Beschleunigung kein Anfahrrucken erfolgen kann.

Der Ausgang des Geschwindigkeitsvergleichers kann mit einer dritten Schalteinheit verbunden sein, durch die bei vorhandenem Ausgangssignal des Geschwindigkeitsvergleichers eine Verbindung des Ausgangs des Sollwertgebers mit der Steuerelektronik herstellbar ist. Dadurch erfolgt die direkte Zuleitung des Sollwertsignals zur Steuerelektronik wenn der Anfahrvorgang beendet und die bestimmte Geschwindigkeit überschritten ist. Nach dem Vorgang der geregelten Anfahrsteuerung kann denn eine herkömmliche Regelung der Beschleunigung während des normalen Fahrbetriebs vorgenommen werden. Eine geregelte Anfahrsteuerung nach den Prinzipien der bekannten Beschleunigungsregelung ist nicht möglich, da die während des Anfahrvorganges vorhandene geringe Fahrgeschwindigkeit nicht auf wirtschaftlich vertretbareweise gemessen werden kann.

Ein Ausführungsbeispiel der Erfindung ist in der Zeichnung dargestellt und und im folgenden näher beschrieben. Es zeigen:

Figur 1 ein Schaltbild einer erfindungsgemäßen Einrichtung

Figur 2 ein Diagramm der Sollwertgeberverstellung über der Zeit

Figur 3 ein Diagramm der Stellgliedverstellung über der Zeit entsprechend der Sollwertverstellung nach Figur 2

Figur 4 ein Diagramm des Beschleunigungsverlaufs über der Geschwindigkeit

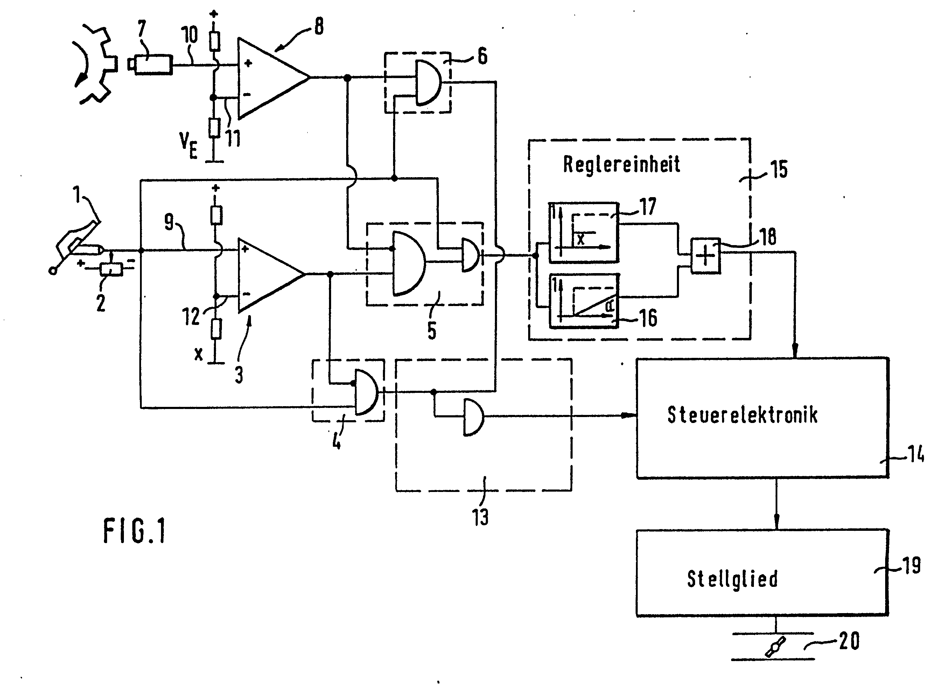

Die in Figur 1 dargestellte Einrichtung besitzt einen durch ein Gaspedal 1 von einem Fahrer verstellbaren Sollwertgeber 2, der als Potentiometer ausgebildet ist.

Der Ausgang des Sollwertgebers 2 ist mit dem einen Eingang 9 eines Schwellwertschalters 3, mit einer Schaltereinheit 4, mit einer Schaltereinheit 5 sowie mit einer Schaltereinheit 6 verbunden.

Der Ausgang eines die Fahrgeschwindigkeit erfassenden Geschwindigkeitsgebers 7 ist mit dem einen Eingang 10 eines Schwellwertschalters 8 verbunden.

Der zweite Eingang 11 des Schwellwertschalters 8 ist von einer konstanten elektrischen Größe beaufschlagt, die einer bestimmten Geschwindigkeit entspricht, während der zweite Eingang 12 des Schwellwertschalters 3 von einer konstanten elektrischen Größe beaufschlagt ist, die der Maximalstellung des Sollwertgebers entspricht, bei der das Fahrzeug noch nicht in Bewegung ist, also noch die Fahrgeschwindigkeit 0 hat.

Der Ausgang des Schwellwertschalters 8 ist zu der Schaltereinheit 6 geführt, bei der eine Verbindung vom Sollwertgeber 2 über eine Verbindungsstufe 13 zu einer Steuerelektronik 14 herstellbar ist, wenn am Ausgang des Schwellwertschalters 8 ein Signal abgegeben wird.

Der Ausgang des Schwellwertschalters 3 ist zur Schaltereinheit 4 geführt, über welche ebenfalls eine Verbindung vom Sollwertgeber 2 zur Verbindungsstufe 13 und zur Steuerelektronik herstellbar ist. Diese Verbindung ist dann geöffnet, wenn vom Schwellwertschalter 3 kein Signal abgegeben wird.

Weiterhin sind die Ausgänge der beiden Schwellwertachalter 3 und 8 zur Schaltereinheit 5 geführt. Wie bereits ausgeführt, ist die Schaltereinheit 5 auch mit dem Sollwertgeber 2 verbunden.

Diese Schaltereinheit 5 öffnet dann die Verbindung vom Sollwertgeber 2 zu einer Reglereinheit 15, wenn hier ein Signal vom Schwellwertschalter 3 zugeleitet wird, aber kein Signal vom Schwellwertschalter 8 vorliegt.

Die Reglereinheit 15 besitzt eine Integrierstufe 16 und eine Begrenzungsstufe 17, denen jeweils die Verbindung mit dem Sollwertgeber 2 zugeführt ist.

Die Ausgänge der Integrierstufe 16 und der Begrenzungsstufe 17 sind eine ebenfalls in der Reglereinheit 15 vorhandenen Additionsstufe 18 zugeführt, deren Ausgang der Steuerelektronik 14 zugeleitet ist.

Die Steuerelektronik 14 erhält somit entweder über die Verbindungsstufe 13 direkt das vom Sollwertgeber 2 ebgegebene Sollwertsignal oder ein von der Reglereinheit 15 aufbereitetes Signal.

Entsprechend der Größe dieser Signale steuert die Steuerelektronik 14 das Stellglied 19 zum Verstellen einer Drosselklappe 20.

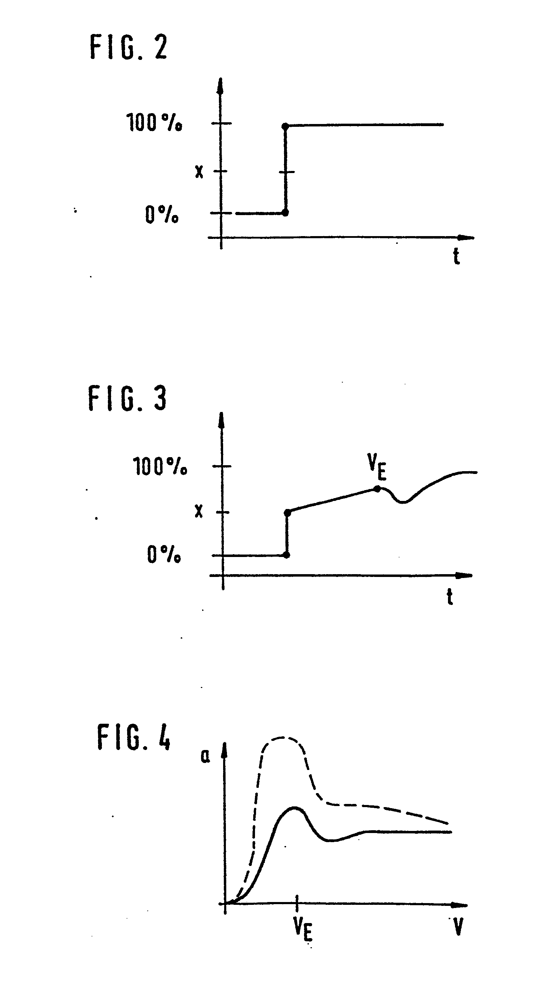

Die Funktion der erfindungsgemäßen Einrichtung wird im folgenden anhand der in den Figuren 2, 3 und 4 dargestellten Diagramme beschrieben.

In der Figur 2 ist für den Sollwertgeber 2 und in Figur 3 für das Stellglied 19 die Verstellung zwischen der Leerlaufstellung (0 %) und der Vollaststellung (100 %) über der Zeit dargestellt.

Figur 4 zeigt den Beschleunigungsverlauf a über der Geschwindigkeit V während des Anfahrvorgangs. Dabei ist in unterbrochener Linie der Beschleunigungsverlauf nach dem Stand der Technik und in durchgezogener Linie der Verlauf nach der Erfindung dargestellt.

Wird beim Anfahrvorgang am Sollwertgeber 2 ein hoher Sollwert eingestellt, z.B. durch maximales Durchtreten des Gaspedals 1, so gibt der Sollwertgeber 2 ein Sollwertsignal von 100 % ab. Dies ist in Figur 2 zu sehen. Dieses Sollwertsignal ist deutlich oberhalb des Wertes x.

Dieser Wert x liegt als Konstantsignal an dem einen Eingang des Schwellwertschalters 3 an und entspricht der Maximalstellung des Sollwertgehers, bei der die Fahrgeschwindigkeit noch 0 ist.

Da das Sollwertsignal größer ist als dieses Konstantsignal, wird vom Schwellwertschalter 3 ein Ausgangssignal abgegeben, und sowohl der Schaltereinheit 5 als auch der Schaltereinheit 4 zugeleitet. Damit ist der Durchgang der Schaltereinheit 4 gesperrt.

Zur selben Zeit ist die Fahrgeschwindigkeit noch 0, so daß das vom Geschwindigkeitsgeber dem Schwellwertschalter 8 zugeleitete Geschwindigkeitssignal geringer ist, als das am anderen Eingang des Schwellwertschalters 8 anliegende bestimmte Fahrgeschwindigkeitssignal. Dieses bestimmte Fahrgeschwindigkeitssignal entspricht einer festgelegten Fahrgeschwindigkeit unterhalb der eine geregelte Steuerung und oberhalb der eine normale herkömmliche Steuerung des Stellglieds 19 erfolgen soll. Diese festgelegte Fahrgeschwindigkeit ist mit $V_E$ bezeichnet.

Da das Geschwindigkeitssignal kleiner ist als $V_E$, gibt der Schwellwertschalter 8 kein Signal ab.

Damit ist der Durchgang der Schaltereinheit 6 gesperrt.

Da vom Schwellwertschalter 3 an der Schaltereinheit 5 ein Signal vorliegt, von dem Schwellwertschalter 8 aber kein Signal vorliegt, ist der Durchgang der Schaltereinheit 5 geöffnet und das Sollwertsignal vom Sollwertgeber 2 beaufschlagt die Integrierstufe 16 und die Begrenzungsstufe 17 der Reglereinheit 15.

Dieses Sollwertsignal, das durch die Vollaststellung des Sollwertgebers 2 sehr hoch ist, wird durch die Begrenzungsstufe 17 auf einen Wert begrenzt, der dem Wert x entspricht und an die Additionsstufe 18 weitergeleitet.

Von der Integrierstufe 16 wird des Sollwertsignal so aufbereitet, daß sein Verlauf über der Zeit dem in Figur 3 dargestellten Kurvenverlauf oberhalb der Größe x entspricht.

Die von der Begrenzungsstufe 17 und der Integrierstufe 16 abgegebenen Signale werden in der Additionsstufe 18 addiert und an die Steuerelektronik 14 weitergeleitet.

Die Addition dieser Signale ist in Figur 3 dargestellt, wobei der senkrechte Anstieg der Kurve bis zum Wert x durch die Begrenzungsstufe 17 gebildet wird. Dieser Wert bleibt über dem Zeitverlauf konstant. Die dazu addierten über den Zeitverlauf ansteigenden Werts der Integrierstufe 16 führen zu dem dargestellten Kurvenverlauf.

Wird eine Stellung des Stellglieds 19 erreicht, die der am Schwellwertschalter 8 fest eingestellten Fahrgeschwindigkeit $V_E$ entspricht, so wird vom Schwellwertschalter 8 ein Ausgangssignal den Schaltereinheiten 5 und 6 zugeleitet.

Dies führt dazu, daß die Schaltereinheit 5 ihren Durchgang schließt und die Schaltereinheit 6 ihren Durchgang öffnet.

Damit erhält die Reglereinheit 15 keine Beaufschlagung mehr, während das Sollwertsignal über die Schaltereinheit 6 und die Vorbindungsstufe 13 direkt zur Steuerelektronik 14 gelangt.

Diese kann nun auf herkömmliche Weise das Stellglied 19 zum Verstellen der Drosselklappe 20 steuern.

Die beschriebene geregelte Steuerung des Stellglieds 19 führt zu der in Figur 4 dargestellten Kurve, die deutlich zeigt, daß unhängig von einer hohen Sollwertvergabe am Anfahrvorgang der Beschleunigungsanstieg auf Werte beschränkt wird, die ein ruckfreies Anfahren gewährleisten.

Ist dagegen die Sollwertvorgabe zu Beginn des Fahrvorganges geringer als das durch den Wert x am Schwellwertschalter 3 festgelegte Konstantsignal, so gibt der Schwellwertschalter 3 kein Ausgangssignal ab. Damit ist der Durchgang der Schaltereinheit 4 geöffnet, und des Sollwertsignal kann über die Verbindungsstufe 13 direkt zur Steuerelektronik 14 gelangen. Gleichzeitig sind die Durchgänge der Schaltereinheiten 5 und 6 gesperrt.

Bei einem Erhöhen des Sollwerts und gleichzeitiger Steigerung der Geschwindigkeit unterhalb der Integrationsstufe 16 festgelegten Steigerungsrate wird am Schwellwertschalter 3 der Wert x und am Schwellwertschalter 8 der Wert $V_E$ überschritten. Dies führt dazu, daß der Durchgang der Schaltereinheit 5 weiterhin gesperrt bleibt, der Durchgang der Schaltereinheit 4 gesperrt wird und der Durchgang der Schaltereinheit 6 geöffnet wird.

Das Sollwertsignal gelangt somit direkt vom Sollwertgeber 2 über die Schaltereinheit 6 und die Verbindungsstufe 13 zur Steuerelektronik 14.

**Patentansprüche**

1. Einrichtung zum Steuern der Stellung eines ein Kraftstoff-Luft-Gemisch beeinflussenden Elements (20) eines Verbrennungsmotors eines Kraftfahrzeuges, mit einem Sollwertgeber (2) zum Erzeugen eines elektrischen Sollwertsignals, das einer Steuerelektronik (14) zuleitbar ist, von der ein Stellglied zum Verstellen des das Kraftstoff-Luft-Gemisch beeinflussenden Elements (20) in eine der Stellung des Sollwertgebers (2) entsprechende Stellung steuerbar ist, dadurch gekennzeichnet, daß zwischen Sollwertgeber (2) und Steuerelektronik (14) eine Reglereinheit (15) angeordnet ist, durch die bei Verstellung des Sollwertgebers (2) aus seiner der Fahrgeschwindigkeit 0 entsprechenden Endstellung die Änderung der Größe des Sollwertsignals pro Zeiteinheit unterhalb einer bestimmten Fahrgeschwindigkeit auf einen Maximalwert begrenzbar ist.

2. Einrichtung nach Anspruch 1, dadurch gekennzeichnet, daß der Maximalwert ein einstellbarer Konstantwert ist.

3. Einrichtung nach einem der vorhergehenden Ansprüche, dadurch gekennzeichnet, daß die Änderung der Größe des Sollwertsignals pro Zeiteinheit ab einem Wert begrenzbar ist, der der Maximalstellung des Sollwertgebers (2) entspricht, bei der die Fahrgeschwindigkeit 0 ist.

4. Einrichtung nach Anspruch 3, dadurch gekennzeichnet, daß der Wert ein einstellbarer Konstantwert ist.

5. Einrichtung nach Anspruch 3, dadurch gekennzeichnet, daß der Wert ein variabler Wert ist.

6. Einrichtung nach Anspruch 5, dadurch gekennzeichnet, daß der Wert in Abhängigkeit des Gesamtfahrzeuggewichts selbsttätig verstellbar ist.

7. Einrichtung nach einem der vorhergehenden Ansprüche, dadurch gekennzeichnet, daß die Reglereinheit (15) eine Integrierstufe (16) aufweist.

8. Einrichtung nach Anspruch 7, dadurch gekennzeichnet, daß die Reglereinheit (15) eine Begrenzungsstufe (17) aufweist, wobei die Ausgangswerte der Integrierstufe (16) und der Begrenzungsstufe (17) eine Additionsstufe (16) und deren Ausgang der Steuerelektronik (14) zuleitbar ist.

9. Einrichtung nach einem der vorhergehenden Ansprüche, dadurch gekennzeichnet, daß die Fahrzeuggeschwindigkeit von einem Geschwindigkeitsgeber (7) erfaßbar und in ein elektrisches Geschwindigkeitssignal umsetzbar ist.

10. Einrichtung nach Anspruch 9, dadurch gekennzeichnet, daß das Geschwindigkeitssignal in einen Eingang (10) und ein der bestimmten Fahrgeschwindigkeit entsprechendes Signal einen zweiten Eingang (11) eines Geschwindigkeitsvergleichers zuleitbar ist, von dem bei größerem Geschwindigkeitssignal als bestimmten Fahrgeschwindigkeitssignal ein Ausgangssignal abgebbar ist.

11. Einrichtung nach Anspruch 10, dadurch gekennzeichnet, daß der Geschwindigkeitsvergleicher ein Schwellwertschalter (8) ist.

12. Einrichtung nach einem der vorhergehenden Ansprüche, dadurch gekennzeichnet, daß das Sollwertsignal dem einen Eingang (9) und ein der Maximalstellung des Sollwertgebers (2), bei der die Fahrgeschwindigkeit 0 ist, entsprechendes elektrisches Konstantsignal einem zweiten Eingang (12) eines Sollwertvergleichers zuleitbar ist, von dem bei größerem Sollwertsignal als Konstantsignal ein Ausgangssignal abgegebbar ist.

13. Einrichtung nach Anspruch 12, dadurch gekennzeichnet, daß der Sollwertvergleicher ein Schwellwertschalter (3) ist.

14. Einrichtung nach einem der vorhergehenden Ansprüche, dadurch gekennzeichnet, daß der Ausgang des Geschwindigkeitsvergleichers und der Ausgang des Sollwertvergleichers mit einer Schaltereinheit (5) verbunden sind, durch die bei vorhandenem Ausgangssignal des Sollwertvergleichers und nichtvorhandenem Ausgangssignal des Geschwindigkeitsvergleichers ein Sollwertsignal des Sollwertgebers (2) der Reglereinheit (15) zuleitbar ist.

15. Einrichtung nach einem der vorhergehenden Ansprüche, dadurch gekennzeichnet, daß der Ausgang des Sollwertvergleichers mit einer zweiten Schaltereinheit (4) verbunden ist, durch die bei nichtvorhandenem Ausgangssignal des Sollwertvergleichers eine Verbindung des Ausgangs des Sollwertgebers (2) mit der Steuerelektronik (14) herstellbar ist.

16. Einrichtung nach einem der vorhergehenden Ansprüche, dadurch gekennzeichnet, daß der Ausgang des Geschwindigkeitsvergleichers mit einer dritten Schaltereinheit (6) verbunden ist, durch die bei vorhandenem Ausgangssignal des Geschwindigkeitsvergleichers eine Verbindung des Ausgangs des Sollwertgebers (2) mit der Steuerelektronik (14) herstellbar ist.

## Claims

1. Device for controlling the position of an element (20) influencing a fuel-air mixture in an internal combustion engine of a motor vehicle, with a desired-value signal emitter (2) for producing an electrical desired-value signal feedable to a control electronics element (14) whereby a regulating element for adjusting the element (20) influencing the fuelair mixture into a position corresponding to the position of the desired-value signal emitter (2) is controllable, characterised in that between the desired-value signal emitter (2) and the control electronics element (14) there is arranged a controller unit (15) whereby on adjustment of the desired-value signal emitter (2) from its end position corresponding to 0 travelling speed the modification of the magnitude of the desired-value signal per unit of time below a specified travelling speed is limitable to a maximum value.

2. Device according to claim 1, characterised in that the maximum value is an adjustable constant value.

3. Device according to one of the preceding claims, characterised in that the modification of the magnitude of the desired-value signal per unit of time is limitable from a value onwards which corresponds to the maximum position of the desired-value signal emitter (2) at which the travelling speed is 0.

4. Device according to claim 3, characterised in that the value is an adjustable constant value.

5. Device according to claim 3, characterised in that the value is a variable value.

6. Device according to claim 5, characterised in that the value is automatically adjustable in dependence on the total vehicle weight.

7. Device according to one of the preceding claims, characterised in that the controller unit (15) has an integrating stage (16).

8. Device according to claim 7, characterised in that the controller unit (15) has a limiting stage (17), the output values of the integrating stage (16) and of the limiting stage (17) are feedable to an addition stage (18), and the output thereof to the control electronics element (14).

9. Device according to one of the preceding claims, characterised in that the vehicle speed is detectable by a speed value signal emitter (7) and convertible to an electrical speed signal.

10. Device according to claim 9, characterised in that the speed signal is adapted to be fed into one input (10) and a signal corresponding to the defined travelling speed is adapted to be fed to a second input (11) of a speed comparator from which an output signal can be emitted when the speed signal is greater than the defined travelling speed signal.

11. Device according to claim 10, characterised in that the speed comparator is a threshold value switch (8).

12. Device according to one of the preceding claims, characterised in that the desired-value signal is feedable to one input (9) and an electrical constant signal corresponding to the maximum position of the desired-value signal emitter (2) at which the travelling speed is 0 is feedable to a second input (12) of a desired-value comparator which is adapted to emit an output signal when there is a greater desired-value signal than the constant signal.

13. Device according to claim 12, characterised in that the desired-value comparator is a threshold value switch (3).

14. Device according to one of the preceding claims, characterised in that the output of the speed comparator and the output of the desired-value comparator are connected to a switch unit (5) whereby, when an output signal of the desired-value comparator occurs and there is no speed comparator output signal present, a desired-value signal of the desired-value signal emitter (2) is feedable to the controller unit (15).

15. Device according to one of the preceding claims, characterised in that the output of the desired-value comparator is connected to a second switch unit (4) whereby a connection can be established between the output of the desired-value signal emitter (2) and the control electronics element (14) when the output signal of the desired-value comparator is not present.

16. Device according to one of the preceding claims, characterised in that the output of the speed comparator is connected to a third switch unit (6) whereby a connection is establishable between the output of the desired-value signal emitter (2) and the control electronics element (14) when a speed comparator output signal is present.

## Revendications

1. Dispositif pour commander la position d'un élément (20) influençant un mélange air-carburant dans le moteur à combustion interne d'un véhicule automobile, comportant un indicateur (2) de valeurs de consigne pour engendrer un signal électrique de valeur de consigne pouvant être applique à un circuit électronique de commande (14), par lequel un organe de manoeuvre peut être commande en vue d'ajuster, à une position correspondant à la position de l'indicateur (2) de valeurs de consigne, ledit élément (20) influençant le mélange air-carburant, dispositif caractérisé par le fait qu'une unité de réglage (15) est intercalée entre l'indicateur (2) de valeurs de consigne et le circuit électronique de commande (14), unité par l'intermédiaire de laquelle, lorsque l'indicateur (2) de valeurs de consigne est écarté par réglage de sa position extrême correspondant à la vitesse de déplacement 0, la variation de la grandeur du signal de valeur de consigne par unité de temps, en deçà d'une vitesse de deplacement determinée, peut être limitée à une valeur maximale.

2. Dispositif selon la revendication 1, caractérisé par le fait que la valeur maximale est une valeur de constante réglable.

3. Dispositif selon l'une des revendications précédentes, caractérisé par le fait que la variation de la grandeur du signal de valeur de consigne par unité de temps peut être limitée à partir d'une valeur qui correspond à la position maximale de l'indicateur (2) de valeurs de consigne, dans laquelle la vitesse de déplacement est égale à 0.

4. Dispositif selon la revendication 3, caractérisé par le fait que la valeur est une valeur constante réglable.

5. Dispositif selon la revendication 3, caractérisé par le fait que la valeur est une valeur variable.

6. Dispositif selon la revendication 5, caractérisé par le fait que la valeur est ajustable automatiquement en fonction du poids total du véhicule.

7. Dispositif selon l'une des revendications precédentes, caractérisé par le fait que l'unité de réglage (15) présente un étage d'intégration (16).

8. Dispositif selon la revendication 7, caractérise par le fait que l'unité de réglage (15) comporte un étage limiteur (17), les valeurs de sortie de l'étage d'intégration (16) et de l'étage limiteur (17) d'un étage être appliquées au circuit électronique de commande (14).

9. Dispositif selon l'une des revendications precedentes, caractérisé par le fait que la vitesse du vehicule peut être captée par un indicateur (7) de vitesse, et être convertie en un signal électrique de vitesse.

10. Dispositif selon la revendication 9, caractérisé par le fait que le signal de vitesse peut être appliqué à l'une (10) des entrées d'un comparateur de vitesse, et un signal correspondant à la vitesse de déplacement déterminée peut être appliqué à une seconde entrée (11) dudit comparateur, ce dernier pouvant délivrer un signal de sortie lorsque le signal de vitesse est supérieur au signal de vitesse de déplacement déterminée.

11. Dispositif selon la revendication 10, caractérisé par le fait que le comparateur de vitesse consiste en un interrupteur (8) à valeur de seuil.

12. Dispositif selon l'une des revendications précédentes, caractérisé par le fait que le signal de valeur de consigne peut être appliqué à l'une (9) des entrées d'un comparateur de valeurs de consigne et un signal électrique constant, correspondant à la position maximale de l'indicateur (2) de valeurs de consigne pour laquelle la vitesse de déplacement est égale à 0, peut être appliqué à une seconde entrée (12) dudit comparateur, lequel peut délivrer un signal de sortie lorsque le signal de valeur de consigne excède le signal constant.

13. Dispositif selon la revendication 12, caractérisé par le fait que le comparateur de valeurs de consigne consiste en un interrupteur (3) à valeur de seuil.

14. Dispositif selon l'une des revendications précédentes, caractérisé par le fait que la sortie du comparateur de vitesse et la sortie du comparateur de valeurs de consigne sont reliées à une unité de commutation (5) par l'intermédiaire de laquelle, en présence d'un signal de sortie provenant du comparateur de valeurs de consigne et en l'absence d'un signal de sortie provenant du comparateur de vitesse, un signal de valeur de consigne délivré par l'indicateur (2) de valeurs de consigne peut être appliqué à l'unité de reglage (15).

15. Dispositif selon l'une des revendications précédentes, caractérisé par le fait que la sortie du comparateur de valeurs de consigne est raccordée à une deuxième unité de commutation (4) par l'intermédiaire de laquelle, en l'absence d'un signal de sortie provenant du comparateur de valeurs de consigne, une liaison peut être établie entre la sortie de l'indicateur (2) de valeurs de consigne et le circuit électronique de commande (14).

16. Dispositif selon l'une des revendications précédentes, caractérisé par le fait que la sortie du comparateur de vitesse est raccordée à une troisième unité de commutation (6) par l'intermédiaire de laquelle, en présence d'un signal de sortie provenant du comparateur de vitesse, une liaison peut être établie entre la sortie de l'indicateur (2) de valeurs de consigne et le circuit electronique de commande (14).

Reglereinheit

Steuerelektronik

Stellglied

$V_E$

x

FIG.1

# FIG. 2

# FIG. 3

# FIG. 4